# FASCICULE DE BREVET EUROPEEN

(11) **EP 1 816 072 B1**
(45) Date de publication et mention de la délivrance du brevet: **20.08.2008**
(21) Numéro de dépôt: 07101182.9
(22) Date de dépôt: 25.01.2007
(51) Int. Cl.: B64D 33/04, F02K 1/44

(54) **Système d'éjection d'un turboréacteur à double flux**
Luftaustrittsystem für ein Mantelstromtriebwerk
Exhaust system for a turbofan engine

(30) Priorité: 27.01.2006 FR 0650295
(43) Date de publication de la demande: 08.08.2007
(73) Titulaire: SNECMA, 75015 Paris (FR)
(72) Inventeur: Bigot, Pascal, 77950 Moisenay (FR); Chanez, Philippe, 75015 Paris (FR)
(74) Mandataire: David, Daniel

(56) Documents cités:
- EP-A2- 1 104 847
- FR-A1- 2 294 085
- FR-A1- 2 740 832
- US-A- 4 280 587
- US-A1- 2004 140 397
- US-A1- 2005 223 691
- VISWANATHAN K: "An Elegant Concept for Reduction of Jet Noise from Turbofan Engines" AIAA 2004-2975, 10 mai 2004 (2004-05-10), - 12 mai 2004 (2004-05-12) pages 1970-1983, XP009073325 10th AIAA/CEAS Aeroacoustics Conference, Manchester, United Kingdom

## Description

La présente invention concerne le domaine des aéronefs propulsés par au moins un turboréacteur à double flux fixé à proximité de leur fuselage, notamment sous une aile ou à l'arrière, et vise un moyen pour atténuer le bruit émis par le moteur.

Un turboréacteur à double flux est constitué d'un moteur à turbine à gaz entraînant un soufflante carénée, placée généralement à l'amont. La masse d'air aspirée par le moteur est divisée en un flux primaire et un flux secondaire concentriques. Le flux primaire est guidé vers le corps primaire où il est comprimé à nouveau, chauffé dans une chambre de combustion, guidé vers des étages successifs de turbines puis éjecté en un flux gazeux primaire. Le flux secondaire est comprimé par un étage de soufflante carénée, puis éjecté directement sans avoir été chauffé. Les deux flux peuvent être éjectés séparément en deux flux concentriques ou bien mélangés dans un même canal avant éjection. Un ou plusieurs étages de turbine du corps primaire sont dédiés à l'entraînement de la soufflante. Le turboréacteur est logé dans une nacelle conformée de manière à rendre la traînée aérodynamique aussi faible que possible. Dans le cas d'un moteur à éjection séparée des flux primaire et secondaire, la nacelle comprend une première partie enveloppant la soufflante et une deuxième partie formant la carène du corps primaire. Les deux enveloppes se terminent vers l'aval chacune par une tuyère d'éjection : flux primaire et flux secondaire. Dans le cas d'un mélange des flux, la nacelle forme une seule enveloppe extérieure terminée par une tuyère d'éjection de l'ensemble : à l'intérieur de la nacelle le plan d'éjection de la tuyère d'éjection du flux primaire est situé en amont par rapport au plan d'éjection du flux mélangé.

Les émissions sonores des moteurs civils à turbosoufflante ont deux origines principales : le jet en sortie de tuyère et le bruit de la soufflante à l'amont. La présente invention concerne le bruit émis par le jet en sortie de tuyère.

Le bruit émis par les avions est une nuisance que l'on cherche en permanence à réduire. Ce bruit est particulièrement perceptible dans les phases d'approche et de décollage dans les zones situées à proximité des aéroports et qui sont le plus souvent urbanisées. De nombreuses solutions ont déjà été proposées dont en particulier celle décrite par K Viswanathan dans l'article AIAA 2004-2975 « An élégant concept for réduction of jet noise from turbofan engines » (un élégant concept pour réduire le bruit d'éjection d'un moteur à turbosoufflante). Une réduction importante du bruit est observée dans la direction arrière d'un moteur à double flux lorsque la tuyère du flux primaire présente un plan d'éjection incliné vers l'amont. Ce plan correspond au plan formé par le bord libre de la tuyère. Il est incliné d'un angle par rapport au plan perpendiculaire à l'axe du moteur pouvant aller jusqu'à 45°. L'axe du moteur et celui du flux gazeux se correspondent.

Par ailleurs, le document FR 2740832 concerne un arrière corps de turboréacteur à double flux comportant une tuyère primaire, dont l'entrée est de section circulaire et un tuyère secondaire, de forme annulaire dont l'entrée est également de section circulaire. Les tuyères primaire et secondaire comprennent une partie de section évolutive se terminant en sortie par des sections elliptiques. L'effet consiste en une modification du champ de vitesse dans le jet et corrélativement, une modification du spectre sonore émis par ce jet.

On peut également citer le document FR 2294085, qui décrit un procédé et un appareil pour contrôler et réduire des tourbillons produits aux extrémités d'aile ou sur d'autres éléments d'un véhicule aérodynamique tel qu'un avion se déplaçant dans un milieu fluide, et pour réduire la trainé induite par de tel tourbillons.

La présente invention vise à réduire le bruit perçu dans la cabine recevant les passagers de l'avion en même temps que l'on réduit le bruit en aval de la tuyère d'éjection sous l'avion.

On parvient à cet objectif avec un système d'éjection d'un turboréacteur à double flux comportant une tuère d'éjection comportant une partie supérieure, une partie inférieure, une partie latérale intérieure et une partie latérale extérieure, la partie supérieure était en amont par rapport à la partie inférieure, caractérisé par le fait que la partie latérale extérieure de la tuyère d'éjection est en amont de la partie latérale intérieure.

On a constaté en effet avec surprise que l'on pouvait obtenir un effet de réduction de bruit selon deux directions correspondant aux plans passant par l'axe du moteur.

Avantageusement le bord de fuite forme un plan, d'angle A1 avec la verticale compris entre 5 et 15°. Cette disposition correspond à une réduction du bruit sous l'avion. Elle vise à protéger les zones situées au sol lors des phases de vol en approche ou bien au décollage. Le bord de fuite forme également un plan d'angle A2 avec la direction horizontale compris entre 5 et 15°. Cette disposition permet alors d'atténuer le bruit perçu en cabine. De préférence, les angles A1 et A2 sont égaux.

La présente invention s'applique à un turboréacteur à flux primaire et flux secondaire à éjections séparées, dont au moins l'une des deux tuyères est ainsi conformée.

La présente invention s'applique également à un turboréacteur à flux primaire et flux secondaire mélangés dont la tuyère d'éjection du flux de mélange est ainsi conformée.

On décrit maintenant l'invention plus en détail en référence aux dessins sur lesquels
La figure 1 montre, vue de côté, la partie arrière d'une nacelle de turboréacteur selon l'art antérieur ;
La figure 2 montre, vue de côté, côté extérieur, la partie arrière d'une nacelle de turboréacteur conforme à l'invention ;
La figure 3 montre, vue de dessus, la nacelle de la figure 2 montée sous une aile d'avion ;
La figure 4 montre un mode de réalisation de l'invention appliquée à une tuyère pour flux primaire et secondaire mélangés. Le moteur est montré en perspective de trois quart arrière avec une partie de l'enveloppe arrachée.

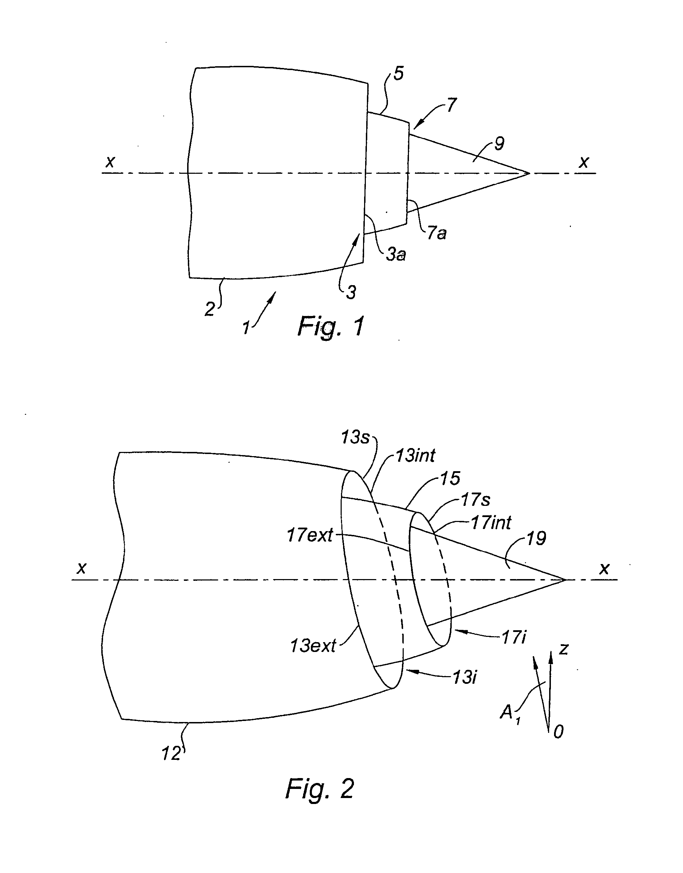

La nacelle 1, selon l'art antérieur, dont on a représenté la partie arrière schématiquement forme l'enveloppe d'un turboréacteur à double flux, non visible, avec une soufflante amont. L'amont est vers la gauche sur la figure 1. Dans les avions civils, un tel moteur est le plus souvent accroché sous l'aile par l'intermédiaire d'un pylône non visible ici, mais il existe aussi des configurations où il est fixé à l'arrière du fuselage. La nacelle est conformée avec un profil aérodynamique de manière à produire une traînée sur les surfaces extérieures et intérieures aussi faible que possible. Selon cet exemple, il s'agit d'un agencement à flux séparés. On distingue la surface cylindrique externe 2 de la nacelle enveloppant la soufflante avec une tuyère 3 du flux secondaire et son bord de fuite 3a. En aval de la tuyère secondaire, on trouve la carène 5 du corps primaire, également cylindrique, se terminant par la tuyère du flux primaire 7 et son bord de fuite 7a. Ici la tuyère primaire est annulaire autour d'un cône 9. En fonctionnement, les flux primaire et secondaire sont concentriques et séparés. Ils se rejoignent seulement en aval de la tuyère primaire. Les deux bords de fuite 3a et 7a sont situés chacun dans un plan perpendiculaire à l'axe XX du moteur.

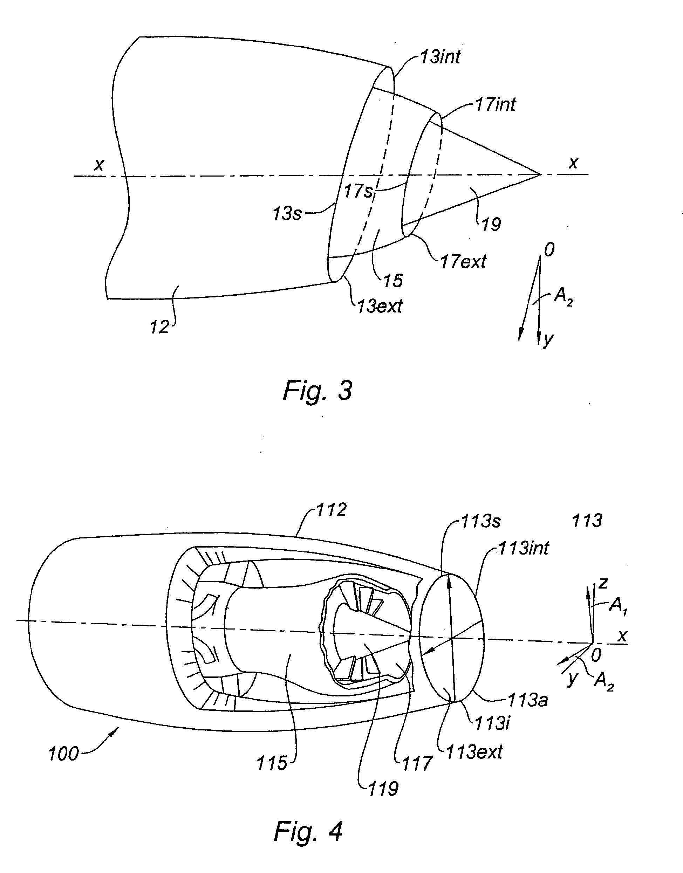

Sur les figures 2 et 3, on a représenté une configuration de tuyère conforme à l'invention. La figure 2 montre la partie arrière de la nacelle, vue de côté, côté extérieur, c'est-à-dire en direction du fuselage. La figure 3 montre la même nacelle vue de dessus, sous l'aile par exemple.

Comme dans le cas précédent, la partie arrière de la nacelle comprend l'enveloppe cylindrique 12 de la soufflante qui se termine par la tuyère 13 du flux secondaire délimitée par son bord de fuite 13a. L'enveloppe 15 du corps primaire se termine par la tuyère 17 délimitée par son bord de fuite 17a. Le moteur se prolonge vers l'arrière par un cône 19.

Pour la tuyère du flux secondaire 13, on distingue le bord supérieur 13s et le bord inférieur 13i définis par rapport au plan horizontal passant par l'axe XX du moteur. On distingue aussi le bord latéral extérieur 13ext et le bord latéral intérieur 13int définis par rapport au plan vertical passant par l'axe XX du moteur. Les directions verticale et horizontale sur le moteur s'entendent lorsque le moteur est monté sur l'avion et l'avion est au sol. Les situations intérieure et extérieure sont définies par rapport à la position du moteur sur l'avion. Le côté intérieur est celui qui est proche du fuselage, le côté extérieur est celui qui est éloigné du fuselage.

Pour la tuyère du flux primaire, on retrouve les références correspondantes : bord inférieur 17i et bord supérieur 17s, ainsi que bord latéral intérieur 17int et bord latéral extérieur 17ext.

Conformément à l'invention, une des deux tuyères 13 et 17, la tuyère du flux secondaire 13 par exemple, est conformée de la façon suivante.

Le bord supérieur 13s est situé en amont par rapport au bord inférieur 13i. Lorsque le bord de fuite 13a est plan, comme sur la figure 2, ce plan est incliné vers le haut d'un angle A1 déterminé, par rapport à la verticale Oz. Cet angle est de préférence compris entre 5 et 15° ; plus particulièrement il est de l'ordre de 10°. La partie inférieure comporte ainsi une plus grande surface de réflexion des ondes sonores vers le haut lorsque l'avion est en vol.

Par ailleurs, le bord latéral extérieur 13ext est situé en amont par rapport au bord latéral intérieur 13int. Lorsque le bord de fuite 13a est plan, il forme un angle A2 par rapport à la direction horizontale Oy perpendiculaire à l'axe XX, figure 3. Cet angle est avantageusement compris entre 5 et 15°, plus particulièrement il est de l'ordre de 10°.

Les deux angle A1 et A2 peuvent être égaux.

Dans l'exemple des figures 2 et 3, les deux tuyères 13 et 17 sont conformées de manière que les bords de fuite 13a et 17a définissent des plans d'éjection 13a et 17a parallèles entre eux. Ainsi pour la tuyère 17, le bord supérieur 17s est situé en amont par rapport au bord inférieur 17i. Par ailleurs le bord latéral extérieur 17ext est en amont par rapport au bord latéral intérieur 17int.

D'autres modes de réalisation que celui des figures 2 et 3, sont possibles. Par exemple, l'invention peut être appliquée à la seule tuyère de soufflante ou bien à la seule tuyère de flux primaire ou encore les plans d'éjection des deux tuyères être inclinés selon des angles différents.

Par ailleurs, ce mode de réalisation se rapporte à des tuyères dont le bord de fuite est dans un seul plan. Cependant l'invention couvre également le cas où le bord de fuite de l'une, l'autre ou des deux tuyères n'est pas compris dans un seul plan. La tuyère par exemple peut avoir la forme d'une écope ou définir au moins deux plans différents formant un angle entre eux.

La surface interne de la tuyère est, de préférence, traitée avec un matériau destiné à absorber les ondes sonores comme cela est connu.

Sur la figure 4, on a représenté un autre mode de réalisation avec application de l'invention à une nacelle avec mélange des flux primaire et secondaire avant éjection.

La nacelle 100 comporte une enveloppe 112 de la soufflante. A l'intérieur de l'enveloppe avec un arraché, on a représenté la carène du corps primaire 115 terminée par la tuyère du flux primaire 117. L'échappement du flux primaire à l'intérieur de l'enveloppe est délimité extérieurement par la tuyère 117 et intérieurement par un cône central 119. L'enveloppe cylindrique s'étend depuis la soufflante jusqu'en aval de la tuyère 117 d'éjection du flux primaire. La forme de la tuyère 117 contribue au mélange au moins partiel des flux primaire et secondaire avant l'échappement dans la tuyère commune 113.

On a appliqué l'invention à la tuyère 113 d'éjection du mélange flux primaire et flux secondaire.

De la même façon que pour l'une des tuyères 13 ou 17 de l'application précédente, la tuyère 113 d'éjection du flux commun présente, par rapport à la direction d'avancement de l'avion, un bord supérieur 113s situé en amont par rapport au bord inférieur 113i. Le bord latéral extérieur est également situé en amont par rapport au bord latéral intérieur 113int.

Le plan d'éjection formé par le bord de fuite 113a est incliné, dans le repère orthonormé Oxyz, d'une part par rapport à la verticale Oz passant par l'axe XX d'un angle A1, d'autre part par rapport à l'horizontale Oy d'un angle A2. Ces angles sont de préférence compris entre 5 et 15°, et plus particulièrement ils sont de l'ordre de 10°.

Ici le bord de fuite 113a de la tuyère 113 est dans un seul plan. Il entre également dans le cadre de l'invention de configurer la tuyère de façon que son bord de fuite ne soit pas plan et qu'elle forme par exemple une écope.

## Revendications

1. Système d'éjection d'un turboréacteur à double flux comportant au moins une tuyère d'éjection (13 ; 17; 113) avec un bord de fuite comportant par rapport à l'avion sur lequel il est destiné à être monté un bord supérieur (13s ; 17s ; 113s), un bord inférieur (13i ; 17i ; 113i), un bord latéral intérieur (13int; 17int, 113int) et un bord latéral extérieur (13ex ; 17ex, 113ext), le bord supérieur (13s ; 17s ; 113s) étant en amont par rapport au bord inférieur (13i ; 17i), **caractérisé par le fait que** le bord latéral extérieur (1 3ext ; 17ext ; 113ext) de la tuyère d'éjection est aussi en amont du bord latéral intérieur (13in ; 17int ; 113int).

2. Système selon la revendication précédente dont le bord de fuite (13a ; 17a; 113a) forme un plan d'angle A1 avec la verticale, compris entre 5 et 15°.

3. Système selon l'une des revendications précédentes dont le bord de fuite (13a, 17a ; 113a) forme un plan d'angle A2 avec la direction horizontale compris entre 5 et 15°.

4. système selon l'une des revendications 3 et 4 dont les angles A1 et A2 sont égaux.

5. Système d'éjection pour un turboréacteur à flux primaire et flux secondaire à éjections séparées et comportant une tuyère (17) pour le flux primaire et une tuyère (13) pour le flux secondaire dont au moins l'une des deux tuyères (13 et 17) est conformée selon l'une des revendications 1 à 4.

6. Système d'éjection pour un turboréacteur à flux primaire et flux secondaire mélangés dont la tuyère d'éjection (113) du flux mélangé est conformé selon l'une des revendications 1 à 4.

7. Turboréacteur à double flux comportant un système d'éjection selon l'une des revendications 1 à 6.

## Claims

1. A turbofan exhaust system comprising at least one exhaust nozzle (13, 17, 113) with a trailing edge having an upper edge (13s, 17s, 113s), a lower edge (13i, 17i, 113i), an inner lateral edge (13int, 17int, 113int) and an outer lateral edge (13ext, 17ext, 113ext), the upper edge being upstream with respect to the lower edge, wherein the outer lateral edge of the exhaust nozzle is also upstream of the inner lateral edge.

2. The system as claimed in the preceding claim, wherein the trailing edge (13a, 17a, 113a) forms a plane of angle A1 with the vertical of between 5 and 15°.

3. The system as claimed in either of the preceding claims, wherein the trailing edge (13a, 17a, 113a) forms a plane of angle A2 with the horizontal direction of between 5 and 15°.

4. The system as claimed in either of claims 3 and 4, wherein the angles A1 and A2 are equal.

5. An exhaust system for a jet engine having a separately exhausted primary stream and secondary stream and comprising a nozzle (17) for the primary stream and a nozzle (13) for the secondary stream, wherein at least one of the two nozzles (13, 17) is configured as claimed in one of claims 1 to 4.

6. An exhaust system for a jet engine having a mixed primary stream and secondary stream (113), wherein the exhaust nozzle for the mixed stream is configured as claimed in one of claims 1 to 4.

7. A turbofan comprising an exhaust system as claimed in one of claims 1 to 6.

## Patentansprüche

1. Ausstoßsystem für ein Zweikreis- TL-Triebwerk mit mindestens einer Ausstoßdüse (13; 17; 113) mit einer Austrittskante, die, bezogen auf das Flugzeug, an dem sie eingebaut werden soll, eine obere Kante (13s; 17s; 113s), eine untere Kante (13i; 17i; 113i), eine innere Seitenkante (13int; 17int; 113int) und eine äußere Seitenkante (13ext; 17ext; 113ext) umfasst, wobei sich die obere Kante (13s; 17s; 113s) gegenüber der unteren Kante (13i; 17i; 113i) vorn befindet,
**dadurch gekennzeichnet,**
**dass** die äußere Seitenkante (13et; 17ext; 113ext) der Ausstoßdüse sich auch vor der inneren Seitenkante (13int; 17int; 113int) befindet.

2. System nach dem vorherigen Anspruch, wobei die Austrittskante (13a; 17a; 113a) eine Ebene in dem Winkel A1 zur Vertikalen bildet, der zwischen 5 und 15° beträgt.

3. System nach einem der vorherigen Ansprüche, wobei die Austrittskante (13a; 17a; 113a) eine Ebene in dem Winkel A2 zur horizontalen Richtung bildet, der zwischen 5 und 15° beträgt.

4. System nach einem der Ansprüche 3 und 4, wobei die Winkel A1 und A2 gleich sind.

5. Ausstoßsystem für ein Turbotriebwerk mit Primärstrom und Mantelstrom mit getrenntem Ausstoß, das eine Düse (17) für den Primärstrom und eine Düse (13) für den Mantelstrom enthält, von denen mindestens eine der beiden Düsen (13 und 17) nach einem der Ansprüche 1 bis 4 ausgeführt ist.

6. Ausstoßsystem für ein Turbotriebwerk mit gemischtem Primärstrom und Mantelstrom, bei dem die Ausstoßdüse (113) des gemischten Stroms nach einem der Ansprüche 1 bis 4 ausgeführt ist.

7. Zweikreis-TL-Triebwerk, das ein Ausstoßsystem nach einem der Ansprüche 1 bis 6 enthält.
